# EUROPÄISCHE PATENTSCHRIFT

(11) **EP 0 844 542 B1**
(45) Veröffentlichungstag und Bekanntmachung des Hinweises auf die Patenterteilung: **27.10.1999**
(21) Anmeldenummer: 96118700.2
(22) Anmeldetag: 21.11.1996
(51) Int. Cl.: G05B 19/19

(54) **Numerisches Steuerungsverfahren sowie Regelungsstruktur zur Bewegungsführung von Objekten mit einem Geschwindigkeitreglertakt, der schneller als der Lagereglertakt ist**
Numerical control method and control structure for controlling movement of objects whereby speed control is effected at a higher rate than position control
Méthode et structure de commande numérique pour contrôler le mouvement d'objets avec cadencement du contrôle de vitesse supérieur à celui du contrôle de position

(43) Veröffentlichungstag der Anmeldung: 27.05.1998
(73) Patentinhaber: SIEMENS AKTIENGESELLSCHAFT, 80333 München (DE)
(72) Erfinder: Papiernik, Wolfgang, Dr.-Ing., 91077 Neunkirchen (DE); Seeger, Guido, Dr.-Ing., 91083 Baiersdorf (DE)

(56) Entgegenhaltungen:
- US-A- 5 184 053
- US-A- 5 241 250

## Beschreibung

Die Erfindung betrifft ein Steuerungsverfahren sowie eine dazugehörige Regelungsstruktur zur Bewegungsführung von numerisch gesteuerten Werkzeugmaschinen, Robotern oder dergleichen.

Bei einer Lageregelung der genannten industriellen Maschinen besteht grundsätzlich das Problem einer nur geringen Störgrößenunterdrückung und damit verbunden auch einer geringen dynamischen Steifigkeit des Lageregelkreises aufgrund zu niedriger KV-Faktoren (Verstärkungsfaktoren eines Reglers), die durch eine zu große Lagereglertastzeit bedingt sind.

Dieses Problem konnte bisher nicht zufriedenstellend gelöst werden, da hierfür die Rechenleistung der heute verfügbaren Mikroprozessoren in einer numerischen Steuerung nicht ausreicht, denn deren Rechenleistung ist bekanntermaßen begrenzt.

Herkömmlicherweise wird daher das eingangs genannte Problem dadurch gelöst, daß die komplette Lageregelung in dem oder den zu regelnden Antrieben realisiert wird. Dadurch wird die erforderliche Rechenleistung auf in dem oder den jeweiligen Antrieben installierte Achsprozessoren verteilt. Dies hat jedoch den Nachteil zur Folge, daß in der numerischen Steuerung selbst keine zentrale Kenntnis aller Zustände der Achsen bzw. Achsverbände mehr zur Verfügung steht.

Aus der US-Patentschrift 5 184 053 A ist eine numerische Steuerung für eine Werkzeugsantriebseinheit mit einer Lageregelung und einer Drehzahlregelung bekannt. Die Lageregelung erhält Lagesollwerte vom Steuerungsteil. Die Drehzahlregelung und die Lageregelung erhalten beide die Rückkopplungswerte vom Aufnehmer. Dabei wird die Drehzahlregelung mit einer höheren Rate ausgeführt als die Lageregelung. Jedoch sind Lageregelung und Drehzahlregelung räumlich gemeinsam installiert, so daß auch hier keine zentrale Kenntnis aller Zustände der Achsen bzw. Achsverbände auf Seiten der Steuerung zur Verfügung steht, wenn diese zentrale Lageregelung im Antrieb angeordnet wird.

Aus der US-Patentschrift 5 241 250 A ist eine Regelungsstruktur mit einer räumlich voneinander getrennten Lage- und Geschwindigkeitsregelung bekannt.

Aufgabe der vorliegenden Erfindung ist es daher, ein Steuerungsverfahren sowie eine dazugehörige Regelungsstruktur zu schaffen, mit welchen die Dynamik eines Lageregelkreises erhöht werden kann, wodurch eine höhere Störgrößenunterdrückung sowie damit verbunden eine höhere dynamische Steifigkeit des Lageregelkreises erreicht wird.

Gemäß der vorliegenden Erfindung wird diese Aufgabe gelöst durch ein Steuerungsverfahren zur Bewegungsführung von numerisch gesteuerten Werkzeugmaschinen, Robotern oder dergleichen mit einer Lageregelung mit einem Lageregeltakt und einer Drehzahlregelung mit einem vergleichsweise schnelleren Drehzahlregeltakt, wobei im Lageregeltakt Lagesollwerte als Führungsgröße vorgegeben werden und im Drehzahlregeltakt erfaßte Lageistwerte zur Lageregelung als Regelgröße zurückgeführt werden, wobei die Lageregelung in einem Steuerungsteil vorgesehen wird und die Drehzahlregelung in einem Antriebsteil vorgesehen wird, wobei im Lageregeltakt erfaßte Lageistwerte als erste Regelgröße in die Lageregelung zurückgeführt werden und additiv die Differenz aus den im Drehzahlregeltakt erfaßten Lageistwerten und den im Lageregeltakt erfaßten Lagistwerten als zweite Regelgröße eingangsseitig auf die Drehzahlregelung zurückgeführt wird.

Damit wird u.a. erreicht, daß keine Veränderungen auf Seiten einer numerischen Steuerung erforderlich werden und auch auf Seiten der numerischen Steuerung stets eine zentrale Kenntnis aller Zustände der Achsen bzw. Achsverbände vorhanden ist.

In einer ersten vorteilhaften Ausgestaltung des Steuerungsverfahrens gemäß der vorliegenden Erfindung wird darüber hinaus erreicht, daß die Achsmechanik weniger stark belastet wird, indem alle im Lageregeltakt erfaßten Lageistwerte vor der eingangsseitigen Aufschaltung auf die Drehzahlregelung im Drehzahlregeltakt feininterpoliert werden.

Um die im vorangehenden geschilderten Maßnahmen des Steuerungsverfahrens gemäß der vorliegenden Erfindung auf einfache Art und Weise realisieren zu können, wird darüber hinaus eine Regelungsstruktur geschaffen, welche ebenfalls zur Lösung der eingangs gestellten Aufgabe geeignet ist. Dies geschieht durch eine Regelungsstruktur zur Bewegungsführung von numerisch gesteuerten Werkzeugmaschinen, Robotern oder dergleichen mit einem Lageregler mit einem Lagereglertakt und einem Drehzahlregler mit einem vergleichsweise schnelleren Drehzahlreglertakt, wobei im Lagereglertakt Lagesollwerte als Führungsgröße vorgebbar sind und im Drehzahlreglertakt erfaßbare Lageistwerte zur Lageregelung als Regelgröße zurückführbar sind, wobei der Lageregler in einem Steuerungsteil angeordnet ist und der Drehzahlregler in einem Antriebsteil angeordnet ist, wobei im Lagereglertakt erfaßbare Lageistwerte als erste Regelgröße zum Lageregler zurückführbar sind und additiv die Differenz aus den im Drehzahlreglertakt erfaßbaren Lageistwerten und den im Lagereglertakt erfaßbaren Lagistwerten als zweite Regelgröße eingangsseitig auf den Drehzahlregler zurückführbar ist.

Dadurch wird eine Regelungsstruktur geschaffen, welche eine Kenntnis aller Zustände der Achsen bzw. Achsverbände auf Seiten der numerischen Steuerung ermöglicht und darüber hinaus keine Veränderungen der Regelungsstruktur auf Seiten der numerischen Steuerung erforderlich macht.

Darüber hinaus wird in einer vorteilhaften Ausgestaltung gemäß der vorliegenden Erfindung eine weitere Regelungsstruktur geschaffen, durch welche die Achsmechanik weniger stark belastet wird. Dies wird dadurch erreicht, daß für alle im Lagereglertakt erfaßten Lageistwerte vor deren eingangsseitiger Aufschaltung auf den Drehzahlregler ein im Drehzahlreglertakt arbeitender Feininterpolator vorgesehen ist.

Mit dem Steuerungsverfahren sowie der Regelungsstruktur gemäß der vorliegenden Erfindung lassen sich somit insbesondere folgende Vorteile erzielen: Die Dynamik eines Lageregelkreises wird erhöht, ohne daß der dazu erforderliche Rechenaufwand im Antrieb oder auf Seiten der numerischen Steuerung erheblich erhöht wird. Die regelungstechnisch unwichtigeren Vorgänge erfolgen weiterhin in der numerischen Steuerung. Diese wird somit nicht zusätzlich belastet. Hinzu kommt, daß Lageistwerte inkrementell in einem Signalprozessor verarbeitet werden können, wodurch keine sonst erforderlichen Gleitkommazahlen verarbeitet werden müssen. Dies bringt einen erheblichen Rechenzeitgewinn mit sich. Hinzu kommt auch, daß durch die Maßnahmen gemäß der vorliegenden Erfindung eine Zustandslageregelung ermöglicht wird. Zudem bleibt nach wie vor eine zentrale Kenntnis aller Zustände der Achsen bzw. Achsverbände vorhanden.

Weitere Vorteile und Einzelheiten der vorliegenden Erfindung ergeben sich anhand der folgenden Schilderung eines vorteilhaften Ausführungsbeispieles sowie im Zusammenhang mit den Figuren. In den Figuren sind Elemente mit gleicher Funktionalität der besseren Übersichtlichkeit halber mit gleichen Bezugszeichen gekennzeichnet. Es zeigen:
- FIG 1: ein Blockschaltbild einer P-Lageregelung sowie die dazu äquivalente Darstellungsform einer Zustandsregelung,
- FIG 2: ein Blockschaltbild einer auf der Darstellung gemäß FIG 1 aufbauenden Lageregelung mit zusätzlicher Rückführung der Lagedifferenzen im Drehzahlreglertakt,
- FIG 3: die Herleitung eines Blockschaltbildes mit einer zusammengefaßten Struktur des Lageregelkreises mit Rückführung der Lage im Drehzahlreglertakt,
- FIG 4: ein Blockschaltbild einer Lageregelung mit zusätzlicher Rückführung der Lagedifferenzen im Drehzahlreglertakt und mit Maßnahmen zur Schonung der Achsmechanik,
- FIG 5: ein Vergleich der Sprungantworten eines Lagereglkreises ohne und mit Rückführung der Lage im Drehzahlreglertakt.

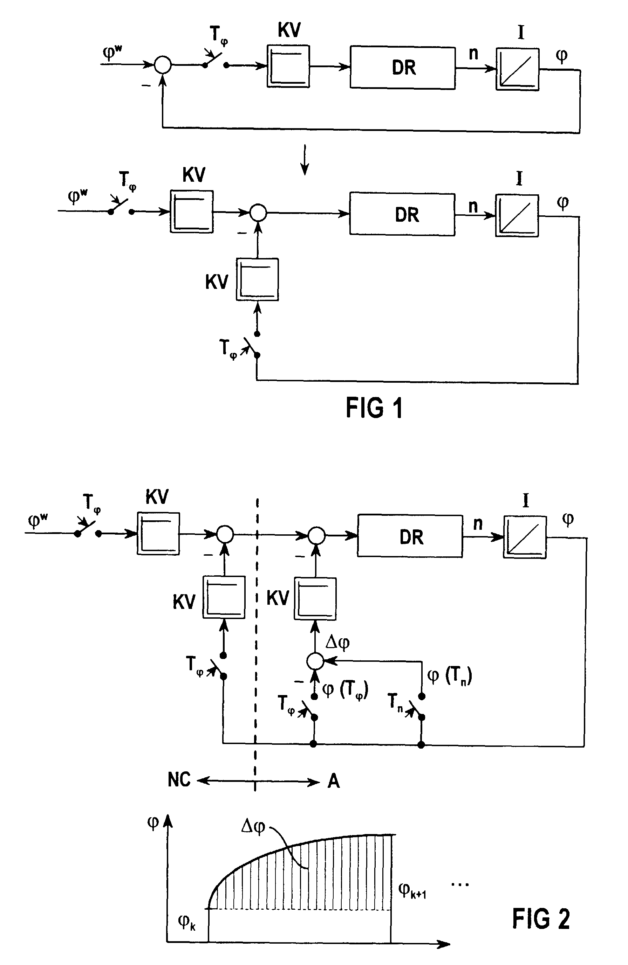

In der Darstellung gemäß FIG 1 ist ein Blockschaltbild einer P-Lageregelung (Proportional-Lageregelung) sowie die dazu äquivalente Darstellung einer Zustandsregelung gezeigt. In der oberen Hälfte ist der Regelkreis der P-Lageregelung dargestellt. Eingangsseitig werden Lagesollwerte ϕ^{W} als Führungsgröße vorgegeben. Auf diese Führungsgröße werden als Regelgröße Lageistwerte ϕ zurückgeführt und die Differenz aus beiden Werten wird gebildet. Diese Differenz wird im Lagereglertakt T_{ϕ} abgetastet, was in der oberen Hälfte der Darstellung gemäß FIG 1 in Form eines mit T_{ϕ} angesteuerten Schalters (Abtastglied) veranschaulicht ist. Diese abgetasteten Werte werden einem Regelglied KV zugeführt und von dort aus einem Drehzahlregelkreis DR zugeleitet. Letzterer stellt ausgangsseitig eine Drehzahl n bereit, aus der über einen Integrator I die bereits erwähnten Lageistwerte ϕ abgeleitet werden. Die Ersatzzeitkonstante des Integrators I entspricht dabei dem Wert des Lagereglertaktes T_{ϕ}.

Dieses konventionelle Blockschaltbild eines Lageregelkreises wird in der unteren Hälfte der Darstellung gemäß FIG 1 in Form einer äquivalenten Zustandsreglerform dargestellt, wobei die Funktionalität beider Blockschaltbilder gleich ist.

Die genannte Zustandsreglerform unterscheidet sich von der bereits beschriebenen konventionellen Darstellungsform eines Lageregelkreises dadurch, daß die Lageistwerte ϕ nicht vor das Abtastglied mit Lageregeltakt T_{ϕ}, sondern auf den Ausgang des Regelgliedes KV zurückgeführt werden. Dazu wird in dem Rückführungszweig für die Lageistwerte ϕ ein weiteres Abtastglied vorgesehen, welches ebenfalls im Lageregeltakt T_{ϕ} angesteuert wird. Diesem nachgeschaltet ist ein weiteres Regelglied KV. Somit besitzt die äquivalente Zustandsreglerform nicht nur im Vorwärtszweig ein Abtastglied sowie ein Regelglied, sondern auch im Rückführzweig für die Lageistwerte.

Daraus ist anschaulich ersichtlich, daß die Dynamik des Regelkreises ausschließlich durch das Abtastglied im Rückführzweig beeinflußt wird, während über den Vorwärtszweig lediglich die eingangsseitig zugeführten Lagesollwerte ϕ^{W} als Führungsgröße zur Verfügung gestellt werden. Es läßt sich somit erkennen, daß im Rückführzweig möglichst schnell abgetastet werden sollte, während es für den Vorwärtszweig gar keinen Sinn macht, schneller zu Tasten als der geschlossene Regelkreis folgen kann.

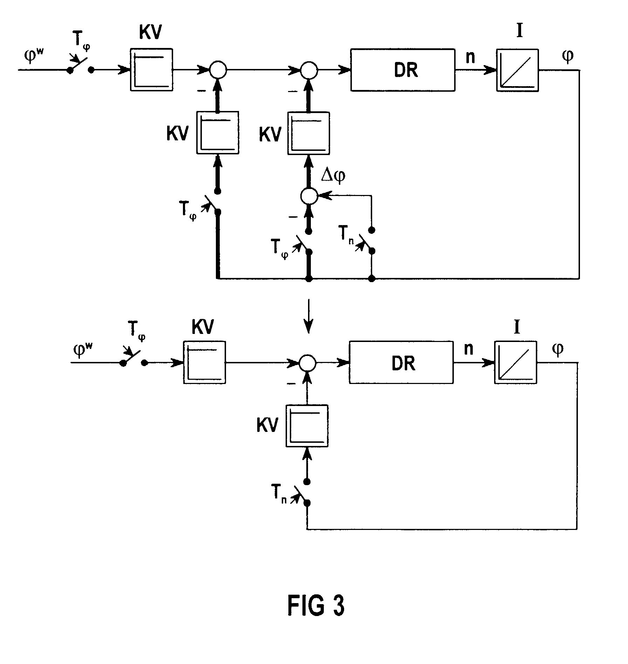

Auf dieser Erkenntnis aufbauend kann daher die im vorangehenden geschilderte Zustandsreglerform gemäß der Darstellung nach FIG 1 erweitert werden. Die Darstellung gemäß FIG 2 zeigt hierzu ein Blockschaltbild einer auf der Darstellung gemäß FIG 1 aufbauenden Lageregelung mit zusätzlicher Rückführung von Lagedifferenzen im Drehzahlreglertakt. Daraus ist ersichtlich, daß auf den Eingang des Drehzahlregelkreises DR neben den - wie oben geschildert - im Rückführzweig im Lagereglertakt T_{ϕ} rückgeführten Lageistwerten ein zweiter Rückführzweig vorgesehen ist, über den ebenfalls Lageistwerte auf den Eingang des Drehzahlregelkreises DR als Regelgröße rückgeführt werden.

In diesem zweiten Rückführzweig werden die Lageistwerte ϕ zum einen über ein Tastglied, welches im Drehzahlreglertakt Tₙ angesteuert wird, abgetastet, wodurch im Drehzahlreglertakt abgetastete Lageregleristwerte ϕ(Tₙ) bereitstehen. Zusätzlich werden über ein weiteres Abtastglied, das über den Lagereglertakt T_{ϕ} angesteuert wird, weitere im Lagereglertakt abgetastete Lageistwerte ϕ(T_{ϕ}) ermittelt, welche von den im Drehzahlreglertakt erfaßten Lageistwerten ϕ(Tₙ) abgezogen werden, so daß Lagedifferenzen Δϕ bereit stehen, welche über ein drittes Regelglied KV für den zweiten Rückführzweig als Regelgröße an den Eingang des Drehzahlregelkreises DR rückgeführt werden. Diese Lagedifferenzen Δϕ werden somit additiv zu den im Lagereglertakt rückgeführten Lageistweren der Zustandsreglerform nach FIG 1 rückgeführt.

Der Drehzahlreglertakt ist dabei im Vergleich zum Lagereglertakt vergleichsweise schneller. Dieser Zusammenhang wird in der Darstellung gemäß FIG 2 anhand eines unterhalb des Blockschaltbildes angeordneten Koordinatensystems veranschaulicht, in dem die Lageistwerte ϕ über die Intervalle k des Lagereglertaktes aufgetragen sind. Zwischen einem zum Taktzeitpunkt k des Lagereglertaktes erfaßten Lageistwert ϕₖ und einem zum folgenden Taktzeitpunkt k+1 erfaßten Lageistwert ϕₖ₊₁ sind die im Drehzahlreglertakt gebildeten Lagedifferenzen Δϕ aufgetragen, woraus ersichtlich ist, daß der Drehzahlregler DR den Lageregler "korrigiert", indem der Drehzahlregler die aktuellen Lagedifferenzen Δϕ zum vorherigen Tastzeitpunkt des Lagereglers erfaßt und additiv mit dem KV-Faktor gewichtet zurückführt.

Vorteilhaft ist es darüber hinaus, wenn der zweite Rückführzweig zur Aufschaltung der Lagedifferenzen Δϕ zusammen mit dem Drehzahlregelkreis DR und dem Integrator I auf Seiten eines Antriebes A angeordnet sind, während der erste Rückführzweig zur Rückführung von im Lagereglertakt gefaßten Lageistwerten sowie die eingangsseitig als Führungsgröße zugeführten Lagesollwerte ϕ^{W} mit dem ersten im Lagereglertakt angesteuerten Abtastglied und dem ersten Regelglied KV auf Seiten einer zentralen numerischen Steuerung NC angeordnet sind.

Die Vorteile dieser Realisierung sind, daß im bestehenden Lageregelkreis auf Seiten der numerischen Steuerung nichts geändert werden muß, während lediglich auf der Antriebsseite A ein zweiter Rückführzweig ergänzt wird. Hinzu kommt, daß der Drehzahlregelkreis inkrementell arbeiten kann (Betrieb eines digitalen Signalprozessors mit ganzzahligen Werten im Integer-Format und nicht mit den erheblich rechenintensiveren Flieskomma-Variablen).

In der Darstellung gemäß FIG 3 ist darüber hinaus die Herleitung eines Blockschaltbildes einer zusammengefaßten Struktur des Lageregelkreises gemäß der Darstellung nach FIG 2 mit Rückführung der Lage im Drehzahlreglertakt gezeigt. Eine solche Ausführung besitzt nicht mehr den Vorteil, daß im bestehenden Lageregelkreis auf Seiten der numerischen Steuerung NC nichts geändert werden muß, sie ist jedoch mit geringerem Aufwand realisierbar. In der oberen Hälfte der Darstellung gemäß FIG 3 ist das Blockschaltbild mit additiver Rückführung der Lagedifferenzen im Drehzahlreglertakt mit dem ersten und dem zweiten Rückführzweig aus FIG 2 erneut gezeigt, wobei der erste Rückführzweig fettgedruckt ist und ebenso der Teil des zweiten Rückführzweiges, in dem Lageistwerte ϕ ebenfalls im Lagereglertakt T_{ϕ} erfaßt werden, fett gezeichnet ist. In der unteren Hälfte der Darstellung gemäß FIG 3 ist die zusammengefaßte Struktur eines Blockschaltbildes des Lageregelkreises mit Rückführung im Drehzahlreglertakt gezeigt. Hierbei ist nur berücksichtigt, daß die beiden im oberen Teil der Darstellung fett eingezeichneten Zweige sich gerade kompensieren. Somit ist im oberen Teil der Darstellung veranschaulicht zu erkennen, daß eine Zustandsregelung vorliegt, bei der die Lage im Drehzahlreglertakt zurückgeführt ist. Letztere ist anhand der im unteren Teil der Darstellung gezeigten zusammengefaßten Struktur erkennbar, welche nunmehr wieder lediglich über einen einzigen Rückführzweig zur Rückführung von Lageistwerten als Regelgröße verfügt, welcher jedoch ausschließlich im Drehzahlreglertakt Tₙ angesteuert wird. Eine solche Realisierung empfiehlt sich insbesondere dann, wenn es keinen Vorteil bereitet, eine bereits vorhandene numerische Steuerung NC unverändert belassen zu können und lediglich in einem Antrieb Änderungen vorzunehmen.

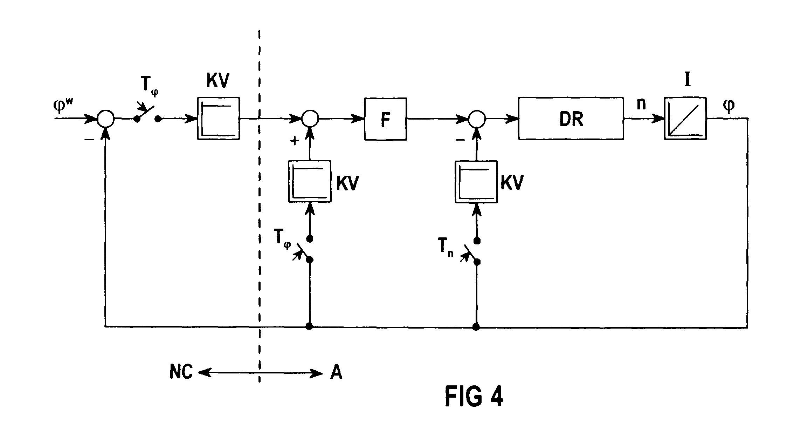

In der Darstellung gemäß FIG 4 ist ein Blockschaltbild einer Lageregelung mit zusätzlicher Rückführung der Lagedifferenzen im Drehzahlreglertakt sowie mit zusätzlichen Maßnahmen zur Schonung der Achsmechanik gezeigt. Das Blockschaltbild entspricht im wesentlichen dem in FIG 2 gezeigten, jedoch ist der zweite Rückführzweig mit den im Lagereglertakt abgetasteten Lageistwerten ϕ(T_{ϕ}), welche von den im Drehzahlreglertakt erfaßten Lageistwerten ϕ(Tₙ) abgezogen werden, in Form von zwei eigenständigen Rückführzweigen gezeigt, so daß die im Lagereglertakt abgetastete Lageistwerte ϕ(T_{ϕ}) positiv zurückgeführt werden, während die im Drehzahlreglertakt erfaßten Lageistwerte ϕ(Tₙ) negativ zurückgeführt werden. Es ist somit nur die Darstellungsform geändert.

Dies geschieht aus dem Grund, daß ein separater Zugriff auf alle im Lagereglertakt abgetasteten Lageistwerte ϕ(T_{ϕ}) benötigt wird, da nur diese vor deren Aufschaltung auf den Eingang des Drehzahlreglers DR einem Feininterpolator F zugeführt werden. Grund dafür ist, daß sich gezeigt hat, daß häufig der Lagereglertakt zu langsam ist oder gerade so langsam ist, daß der Regler gerade eingeschwungen ist. Dadurch wird die Achsmechanik stark belastet, was jedoch unerwünscht ist.

Durch eine Feininterpolation F (bzw. einen Hochlaufgeber oder ein Mittelwertbildner) im Drehzahlreglertakt Tₙ kann dieses Problem behoben werden, wobei selbstverständlich die im Drehzahlreglertakt erfaßten Lageistwerte ϕ(Tₙ) nicht feininterpoliert werden. Ein solcher Feininterpolator F ist ebenfalls auf Seiten des Antriebes A angeordnet, nicht zuletzt deshalb, weil dort der Drehzahlreglertakt bereitsteht. Selbstverständlich ist es unerheblich, ob jedem im Lagereglertakt abgetasteten Lageistwert ϕ(T_{ϕ}) ein separater Feininterpolator F zugeordnet ist, oder aber ob die im Lagereglertakt abgetasteten Lageistwerte ϕ(T_{ϕ}) vorher vorzeichenrichtig zusammengeführt werden und einem gemeinsamen Feininterpolator F zugeführt werden. Die Darstellung gemaß FIG 4 veranschaulicht letzteren Fall.

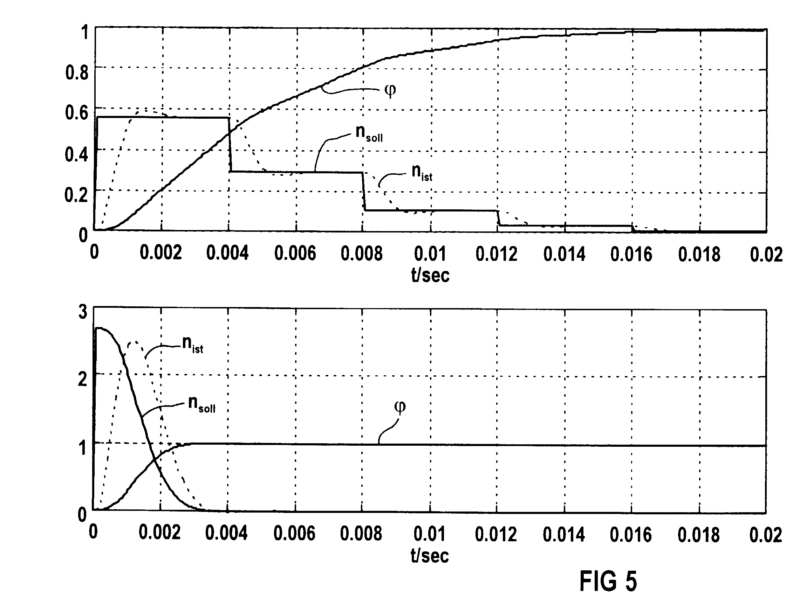

In der Darstellung gemäß FIG 5 ist ein Vergleich der Sprungantworten des Lageregelkreises mit und ohne additiver Rückführung der Lage im Drehzahlreglertakt gezeigt. Im oberen Teil der Darstellung sind die Sprungantworten des Lageregelkreises ohne Rückführung der Lage im Drehzahlreglertakt über die Zeit t dargestellt. Die Tastzeit des Lagereglers T_{ϕ} beträgt 4 msec. Es sind neben dem Lageistwert ϕ der Verlauf der Drehzahlsollwerte nₛₒₗₗ sowie der dazugehörige Verlauf der Drehzahlistwerte nᵢₛₜ aufgetragen. Die Lageistwerte ϕ und Drehzahlsollwerte nₛₒₗₗ sind in Form von durchgehenden Kurven dargestellt, während der Verlauf der Drehzahlistwerte nᵢₛₜ in Form eines unterbrochen gezeichneten Kurvenzuges dargestellt ist.

Im unteren Teil der Darstellung gemäß FIG 5 ist die Sprungantwort des Lageregelkreises mit Rückführung der Lage im Drehzahlreglertakt gezeigt. Die Tastzeit des Drehzahlreglers Tₙ beträgt dabei 62,5 µsec. Der Verlauf der einzelnen Kurven entspricht dem jeweiligen Verlauf im oberen Teil der Darstellung. Daraus ist ersichtlich, daß die Lageistwerte ϕ mit Rückführung der Lage im Drehzahlreglertakt erheblich schneller den gewünschten Lageistwert erreichen. Dies veranschaulicht deutlich den Gewinn an Dynamik durch die vorliegende Erfindung.

## Patentansprüche

1. Steuerungsverfahren zur Bewegungsführung von numerisch gesteuerten Werkzeugmaschinen, Robotern oder dergleichen mit einer Lageregelung mit einem Lageregeltakt (T_{ϕ}) und einer Drehzahlregelung (DR) mit einem vergleichsweise schnelleren Drehzahlregeltakt (Tₙ), wobei im Lageregeltakt (T_{ϕ}) Lagesollwerte (ϕ^{W}) als Führungsgröße vorgegeben werden und im Drehzahlregeltakt (Tₙ) erfaßte Lageistwerte (ϕ) zur Lageregelung als Regelgröße zurückgeführt werden, **dadurch gekennzeichnet,** daß die Lageregelung in einem Steuerungsteil (NC) vorgesehen wird und die Drehzahlregelung (DR) in einem Antriebsteil (A) vorgesehen wird, wobei im Lageregeltakt (T_{ϕ}) erfaßte Lageistwerte (ϕ) als erste Regelgröße in die Lageregelung zurückgeführt werden und additiv die Differenz (Δϕ) aus den im Drehzahlregeltakt (Tₙ) erfaßten Lageistwerten (ϕ(Tₙ)) und den im Lageregeltakt (T_{ϕ}) erfaßten Lageistwerten (ϕ(T_{ϕ})) als zweite Regelgröße eingangsseitig auf die Drehzahlregelung (DR) zurückgeführt wird.

2. Steuerungsverfahren nach Anspruch 1, **dadurch gekennzeichnet,** daß alle im Lageregeltakt (T_{ϕ}) erfaßten Lageistwerte vor der eingangsseitigen Aufschaltung auf die Drehzahlregelung (DR) im Drehzahlregeltakt (Tₙ) feininterpoliert werden.

3. Regelungsvorrichtung zur Bewegungsführung von numerisch gesteuerten Werkzeugmaschinen, Robotern oder dergleichen mit einem Lageregler mit einem Lagereglertakt (T_{ϕ}) und einem Drehzahlregler (DR) mit einem vergleichsweise schnelleren Drehzahlreglertakt (Tₙ), wobei im Lagereglertakt (T_{ϕ}) Lagesollwerte (ϕ^{W}) als Führungsgröße vorgebbar sind und im Drehzahlreglertakt (Tₙ) erfaßbare Lageistwerte (ϕ) zur Lageregelung als Regelgröße zurückführbar sind, **dadurch gekennzeichnet**, daß der Lageregler in einem Steuerungsteil (NC) angeordnet ist und der Drehzahlregler (DR) in einem Antriebsteil (A) angeordnet ist, wobei im Lagereglertakt (T_{ϕ}) erfaßbare Lageistwerte (ϕ) als erste Regelgröße zum Lageregler zurückführbar sind und additiv die Differenz (Δϕ) aus den im Drehzahlreglertakt (Tₙ) erfaßbaren Lageistwerten (ϕ(Tₙ)) und den im Lagereglertakt (T_{ϕ}) erfaßbaren Lageistwerten (ϕ(T_{ϕ})) als zweite Regelgröße eingangsseitig auf den Drehzahlregler (DR) zurückführbar ist.

4. Regelungsvorrichtung nach Anspruch 3, **dadurch gekennzeichnet,** daß für alle im Lagereglertakt (T_{ϕ}) erfaßten Lageistwerte vor deren eingangsseitiger Aufschaltung auf den Drehzahlregler (DR) ein im Drehzahlreglertakt (Tₙ) arbeitender Feininterpolator (F) vorgesehen ist.

## Claims

1. Control method for controlling movement of numerically controlled machine tools, robots or suchlike, having a position control with a position control cycle (T_{ϕ}) and a speed control (DR) with a comparatively faster speed control cycle (Tₙ), wherein in the position control cycle (T_{ϕ}), position setpoints (ϕ^{W}) are specified as a reference variable and actual positions (ϕ) determined in the speed control cycle (Tₙ) are fed back to the position control as a controlled variable, characterised in that the position control is provided in a control portion (NC) and the speed control (DR) is provided in a drive portion (A), wherein actual positions (ϕ) determined in the position control cycle (T_{ϕ}) are fed back to the position control as a first controlled variable and additionally the difference (Δϕ) between the actual positions (ϕ(Tₙ)) determined in the speed control cycle (Tₙ) and the actual positions (ϕ(T_{ϕ})) determined in the position control cycle (T_{ϕ}) is fed back to the input side of the speed controller (DR) as a second controlled variable.

2. Control method according to claim 1,
characterised in that all actual positions determined in the position control cycle (T_{ϕ}) are precision interpolated in the speed control cycle (Tₙ) before the input-side application to the speed control (DR).

3. Control device for controlling movement of numerically controlled machine tools, robots or suchlike, having a position controller with a position controller cycle (T_{ϕ}) and a speed controller (DR) with a comparatively faster speed controller cycle (Tₙ), wherein in the position controller cycle (T_{ϕ}), position setpoints (ϕ^{W}) can be specified as a reference variable and actual positions (ϕ) which can be determined in the speed controller cycle (Tₙ) can be fed back to the position control as a controlled variable,
characterised in that the position controller is arranged in a control portion (NC) and the speed controller (DR) is arranged in a drive portion (A), wherein actual positions (ϕ) which can be determined in the position controller cycle (T_{ϕ}) can be fed back to the position controller as a first controlled variable and additionally the difference (Δϕ) between the actual positions (ϕ(Tₙ)) which can be determined in the speed controller cycle (Tₙ) and the actual positions (ϕ(T_{ϕ})) which can be determined in the position controller cycle (T_{ϕ}) can be fed back to the input side of the speed controller (DR) as a second controlled variable.

4. Control device according to claim 3,
characterised in that there is provided for all actual positions determined in the position controller cycle (T_{ϕ}), before their input-side application to the speed controller (DR), a precision interpolator (F) which operates in the speed controller cycle (Tₙ).

## Revendications

1. Procédé de commande pour le guidage de mouvement de machines-outils, de robots ou analogues à commande numérique, comportant une régulation de position ayant une période (T_{ϕ}) de régulation de position et une régulation (DR) de la vitesse de rotation ayant une période (Tₙ) de régulation de la vitesse de rotation comparativement plus rapide, dans lequel des valeurs (ϕ^{W}) de consigne de position sont prescrites, en tant que grandeurs de consigne, pendant la période (T_{ϕ}) de régulation de la position, et des valeurs réelles (ϕ) de position détectées pendant la période (T_{ϕ}) de régulation de position sont retournées en tant que variable asservies à la régulation caractérisé en ce que la régulation est prévue dans une partie (NC) de commande et la régulation (DR) de vitesse dans une partie (A) d'actionnement, les valeurs (ϕ) réelles de la position détectée dans la période (T_{ϕ}) de régulation de position étant retournées en tant que première variable asservie à la régulation de position et la différence (Δϕ) entre les valeurs (ϕ(Tₙ)) réelles de position détectées dans la période (Tₙ) de régulation de la vitesse de rotation et les valeurs (ϕ(T_{ϕ})) réelles détectées dans la période (T_{ϕ}) de régulation de position est en outre retournée additivement en tant que seconde variable asservie, du côté de l'entrée, à la régulation (DR) de la vitesse de rotation.

2. Procédé de commande suivant la revendication 1, caractérisé en ce que toutes les valeurs réelles de position détectées dans la période (T_{ϕ}) de régulation de position sont interpolées de manière fine avant de passer du côté de l'entrée à la régulation (DR) de vitesse de rotation pendant la période (Tₙ) de régulation de la vitesse de rotation.

3. Dispositif de régulation pour le guidage du mouvement de machines-outils de robots ou analogues à commande numérique, comportant un régulateur de position ayant une période (T_{ϕ}) de régulation de position et un régulateur (DR) de vitesse de rotation ayant une période (Tₙ) de régulation de vitesse de rotation comparativement plus rapide, des valeurs (ϕ^{W}) de consigne de position étant prescrites en tant que grandeurs de consigne dans la période (Tϕ) de régulation de position et des valeurs (ϕ) réelles de position, qui peuvent être détectées dans la période (Tₙ) de régulation de la vitesse de rotation pouvant être retournées en tant que variable asservie à la régulation de la position, caractérisé en ce que le régulateur de position est disposé dans une partie (NC) de commande et le régulateur (DR) de vitesse de rotation est disposé dans une partie (A) d'actionnement, des valeurs (ϕ) réelles de position pouvant être détectées dans la période (T_{ϕ}) de régulation de position sont retournées, en tant que première variable asservie, au régulateur de position et la différence (Δϕ) entre les valeurs (ϕ(Tₙ)) réelles de position pouvant être détectées dans la période (T_{ϕ}) de régulation de la position est en outre envoyée additivement, en tant que seconde variable asservie, du côté de l'entrée au régulateur (DR) de vitesse de rotation.

4. Dispositif de régulation suivant la revendication 3, caractérisé en ce que pour toutes les valeurs réelles de position détectées dans la période (T_{ϕ}) de régulation de position, il est prévu, avant leur envoi à l'entrée du régulateur (DR) de vitesse de rotation, un dispositif (F) d'interpolation fine fonctionnant dans la période (Tₙ) de régulation de la vitesse de rotation.
